# EUROPEAN PATENT SPECIFICATION

(11) **EP 2 023 568 B1**
(45) Date of publication and mention of the grant of the patent: **20.03.2013**
(21) Application number: 07290969.0
(22) Date of filing: 01.08.2007
(51) Int. Cl.: H04L 29/06, H04L 29/14, H04L 12/24, H04L 12/46, H04J 3/08

(54) **Telecommunication system with traffic protection mechanism**
Telekommunikationssystem mit Verkehrsschutzmechanismus
Système de télécommunication doté d'un mécanisme de protection du trafic

(43) Date of publication of application: 11.02.2009
(73) Proprietor: Alcatel Lucent, 75007 Paris (FR)
(72) Inventor: Sestito, Vincenzo, 20127 Milano (IT)
(74) Representative: Wetzel, Emmanuelle

(56) References cited:
- EP-A- 1 162 771
- US-A1- 2007 014 573
- G.8031 EDITORS, STUDY GROUP 15, TD 304 REV1 (WP 3/15): "Ethernet Protection Switching" INTERNATIONAL TELECOMMUNICATION UNION LIVING LIST FOR G.8031, 30 October 2006 (2006-10-30), - 10 November 2006 (2006-11-10) pages 1-21, XP002464637 Geneva

## Description

### Technical field

The present invention relates to the field of telecommunication systems. In particular, the present invention relates to a telecommunication system with a traffic protection mechanism. Further, the present invention relates to a method of performing traffic protection in a telecommunication system.

### Background art

It is known that a telecommunication system may comprise networks of different types interconnected each other for supporting transmission of traffic exchanged between end users. More particularly, a telecommunication system typically comprises a transport network and a number of user networks connected to the transport network, each user network allowing one or more end users to access the transport network.

Generally speaking, the transport network and the user networks are typically based upon different technologies. Indeed, the transport network typically is either a synchronous circuit-switched network (e.g. an SDH or Sonet network) or a packet-switched network wherein traffic is transported by a label-switched protocol (e.g. the T-MPLS protocol, i.e. Transport Multi-Protocol Label Switching). On the other hand, user networks generally are Ethernet networks, ATM networks or the like.

Each user network may be connected to the transport network by means of the so-called "dual homing" technique. According to the dual homing technique, the user network is connected to a first and second edge nodes of the transport network (which are usually termed "primary node" and "secondary node", respectively) by means of a first and second connections (which are usually termed "primary connection" and "secondary connection", respectively). Therefore, according to the dual homing technique, the interconnection between user network and transport network is redundant, so that a traffic protection mechanism can be implemented for protecting traffic at such an interconnection. In particular, if traffic is exchanged between user network and transport network by means of the primary connection and primary node, and a failure occurs either on the primary connection or at the primary node, the secondary connection and secondary node are activated, so that traffic exchange between user network and transport network is guaranteed.

Besides, transport networks typically have a traffic protection mechanism for protecting traffic within the transport network itself.

For instance, if the transport network is a synchronous circuit-switched network, each traffic flow has associated a primary path and a secondary path across the transport network. The primary path is active (and therefore it actually supports traffic transmission) when the transport network normally operates. When a failure occurs on the primary path, the secondary path becomes active, so that traffic transmission across the transport network is guaranteed. The secondary path may be either permanently allocated or it can be allocated when the failure occurs. If the transport network is a packet-switched network implementing a label-switched protocol, a similar traffic protection mechanism is used, wherein suitable signaling messages are used for determining whether the secondary path has to be activated.

Nowadays, in the telecommunication system field a need is arising to provide an end-to-end traffic protection mechanism, i.e. a mechanism suitable to protect traffic along its entire path from the end user transmitting it to the end user receiving it. Such a mechanism should then coordinate traffic protection within the transport network and traffic protection at the interconnections between the transport network and the users networks involved in traffic transmission.

EP 1 162 771 discloses a network protection architecture including a top ring and a bottom ring, each having an I/O node, top down and bottom up working channels, top down and bottom up protection channels, and two double switch interconnection nodes having a receive line and a transmit lir bridging thereacross, respectively. The interconnection nodes have switch for switching a receive line between a working channel an protection channel, a working channel between a transmit line and a transmit line, a protection channel between two transmit lines, a transmit line between a working channel and a protection channel, a working channel between two receive lines, a protection channel between two receive lines.

### Summary of the invention

The Applicant has noticed that by simply combining the above described traffic protection mechanism for protecting traffic within the transport network and the above described dual homing-based traffic protection mechanism for protecting traffic at the interconnection between a transport network and a user network disadvantageously does not provide an efficient end-to-end traffic protection mechanism.

According to the Applicant, this is due to the fact that the above protection mechanism for protecting traffic within the transport network and the above protection mechanism for protecting traffic at the interconnection between a transport network and a user network are not capable of interacting in a suitably efficient way, since they are not able to coordinate each other.

For instance, it is assumed that a user network is connected to a transport network by means of the above dual homing technique. The user network and the transport network exchange traffic by means of the primary connection and primary node. A primary path is allocated within the transport network, which terminates at the primary node. If a failure occurs either on the primary connection or at the primary node, the secondary connection and secondary node are activated. Therefore, the transport network has to activate a secondary path terminating at the secondary node, even if the primary path is not failed.

Therefore, disadvantageously, even if the failure does not occur within the transport network but at the "edge" of the transport network, the traffic protection mechanism within the transport network has to activate the secondary path. This implies a delay in the traffic recovery mechanism, since the operation of activating the secondary path within the transport network may be very time-consuming, especially in case of transport networks comprising a high number of nodes.

Accordingly, the Applicant has faced the problem of providing a telecommunication system having a traffic protection mechanism which is capable of providing a more efficient end-to-end traffic protection, in particular by avoiding activation of the secondary path within the transport network when the failure does not occur within the transport network itself.

According to a first aspect, the present invention provides a telecommunication system comprising a transport network and a user network, the transport network comprising a first edge node and a second edge node, the user network being connected to the transport network by means of the first edge node and the second edge node, the first edge node comprising a first user section and a first transport section, and the second - edge node comprising a second user section and a second transport section, characterized in that the first transport section is connected to the second transport section, and in that the first transport section is switchable between each of: a first status, wherein the first transport section connects the first user section and a first node of the transport network, while it does not connect the first user section and the second transport section and it does not connect the second transport section and the first node of the transport network; a second status, wherein the first transport section connects the first user section and the second transport section, while it does not connect the first user section and the first node of the transport network and it does not connect the second transport section and the first node of the transport network; and a third status, wherein the first transport section connects the second transport section and the first node of the transport network, while it does not connect the first user section and the first node of the transport network and it does not connect the first user section and the second transport section.

Preferably, the second transport section is switchable between each of: a first further status, wherein the second transport section connects the second user section and a second node of the transport network, while it does not connect the second user section and the first transport section and it does not connect the first transport section and the second node of said transport network; a second further status, wherein the second transport section connects the second user section and the first transport section, while it does not connect the second user section and a second node of the transport network (TN) and it does not connect the first transport section and the second node of the transport network; and a third further status, wherein the second transport section connects the first transport section and the second node of the transport network, while it does not connect the second user section and the second node of the transport network and it does not connect the second user section and the first transport section.

Preferably, the first transport section is configured to receive a signaling message either from the second transport section or from the first node and to switch between the first status, the second status and the third status according to the signaling message.

Profitably, the first transport section is configured to receive a first command from the first user section and to switch between the first status, the second status and the third status according to the first command.

Preferably, the first transport section is further configured to transmit a second command to the first user section, the first user section being configured to activate or deactivate according to the second command.

According to a second aspect, the present invention provides a method of performing end-to-end traffic protection in a telecommunication system, the telecommunication system comprising a transport network and a user network, the transport network comprising a first edge node and a second edge node, the user network being connected to the transport network by means of the first edge node and the second edge node, the first edge node comprising a first user section and first transport section, and the second edge node comprising a second user section and a second transport section, the first transport section being connected to the second transport section, the method comprising, at the first transport section: a) receiving a suitable signaling message; b) according to the signaling message, switching between each of a first status, a second status and a third status, wherein: in the first status, the first transport section connects the first user section and a first node of the transport network, while it does not connect the first user section and the second transport section and it does not connect the second transport section and the first node of the transport network; in the second status, the first transport section connects the first user section and the second transport section, while it does not connect the first user section and the first node of the transport network and it does not connect the second transport section and the first node of the transport network; and in the third status, the first transport section connects the second transport section and the first node of the transport network, while it does not connect the first user section and the first node of the transport network and it does not connect the first user section and the second transport section.

Preferably, the method further comprises, at the second transport section: c) receiving a further suitable signaling message; d) according to the further signaling message, switching between each of a first further status, a second further status and a third further status, wherein: in the first further status, the second transport section connects the second user section and a second node of the transport network, while it does not connect the second user section and the first transport section and it does not connect the first transport section and the second node of the transport network; in the second further status, the second transport section connects the second user section and the first transport section, while it does not connect the second user section and the second node of the transport network and it does not connect the first transport section and the second node of the transport network; and in the third further status, the second transport section connects the first transport section and the second node of the transport network, while it does not connect the second user section and the second node of the transport network and it does not connect the second user section and the first transport section.

Preferably, step a) comprises receiving a signaling message either from the second transport section or from the first node. Alternatively, preferably, step a) comprises receiving a first command from the first user section.

According to preferred embodiments, the method further comprises: e) transmitting a second command from the first transport section to the first user section; and f) activating or deactivating the first user section according to the second command.

### Brief description of the drawings

The present invention will become clearer by reading the following detailed description, given by way of example and not of limitation, to be read by referring to the accompanying drawings, wherein:
- Figure 1 schematically shows a telecommunication system comprising a transport network and a user network, according to a preferred embodiment of the present invention;
- Figure 2 shows in further detail the structure of the primary node of Figure 1, according to an embodiment of the present invention,
- Figure 3 schematically shows a telecommunication system comprising a transport network and two user networks, in case of normal operation;
- Figures 4 to 8 show the telecommunication system of Figure 3, in five different failure conditions;
- Figures 9 to 11 show in detail the operation of the telecommunication system of Figure 3 in the failure conditions of Figures 4 to 6, respectively; and
- Figure 12 schematically show the structure of a signaling message, according to an embodiment of the present invention.

### Detailed description of preferred embodiments of the invention

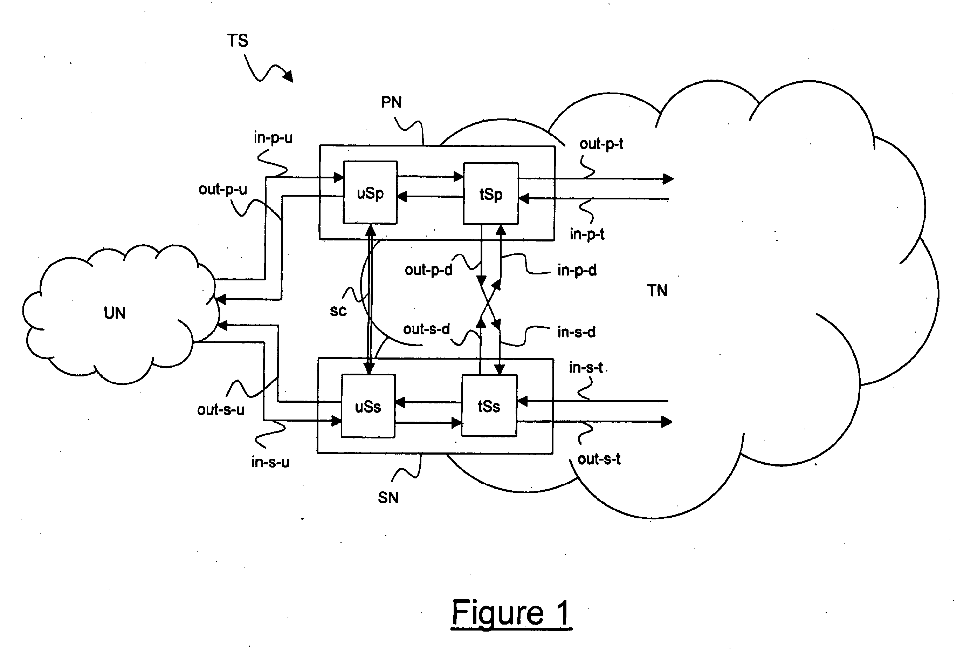

Figure 1 schematically shows a telecommunication system TS comprising a transport network TN and a user network UN interconnected to the transport network TN, according to an embodiment of the present invention.

Preferably, the transport network TN comprises a first edge node (which will be termed "primary node") PN and a second edge node (which will be termed "secondary node") SN.

Preferably, the primary node PN has a primary user input in-p-u, a primary user output out-p-u, a primary transport input in-p-t, a primary transport output out-p-t, a primary dual side input in-p-d and a primary dual side output out-p-d. The primary user input in-p-u and the primary user output out-p-u substantially correspond to the primary connection between the user network UN and the primary node PN. Further, the primary transport input in-p-t and the primary transport output out-p-t are suitable to connect the primary node PN to a first further node (not shown in Figure 1) of the transport network TN. Besides, the primary dual side input in-p-d and the primary dual side output out-p-d are suitable to connect the primary node PN to the secondary node SN.

Preferably, the primary node PN comprises a primary user section uSp and a primary transport section tSp. The primary user section uSp has an input corresponding to the primary user input in-p-u and an output corresponding to the primary user output out-p-u. Further, the primary transport section tSp has a first input corresponding to the primary transport input in-p-t, a first output corresponding to the primary transport output out-p-t, a second input corresponding the primary dual side input in-p-d and a second output corresponding to the primary dual side output out-p-d. Preferably, the primary user section uSp and the primary transport section tSp are bidirectionally interconnected each other.

The structure of the secondary node SN is identical to the structure of the primary node PN described above. Therefore, the structure of the secondary node SN will only briefly described. Preferably, the secondary node SN has:
- a secondary user section uSs and a secondary transport section tSs bidirectionally interconnected each other;
- a secondary user input in-s-u and a secondary user output out-s-u substantially corresponding to the secondary connection between the user network UN and the secondary node SN;
- a secondary transport input in-s-t and a secondary transport output out-s-t suitable to connect the secondary node SN to a second further node (not shown in Figure 1) of the transport network TN; and
- a secondary dual side input in-s-d and a secondary dual side output out-s-d suitable to connect the secondary node SN to the primary node PN.

Preferably, the primary and secondary user sections uSp, uSs are bidirectionally interconnected each other through a signaling connection sc through which they exchange signaling messages, as it will be described in detail herein after.

According to preferred embodiments of the present invention, the primary and secondary transport sections tSp, tSs are bidirectionally interconnected each other. In particular, the primary dual side output out-p-d is connected to the secondary dual side input in-s-d, while the primary dual side input in-p-d is connected to the secondary dual side output out-s-d.

According to preferred embodiments of the present invention, the primary transport section tSp is switchable between:
- a first status, wherein it bidirectionally connects the primary user section uSp and the first further node;
- a second status, wherein it bidirectionally connects the primary user section uSp and the secondary transport section tSs; and
- a third status, wherein it bidirectionally connects the secondary transport section tSs and the first further node.

Further, according to preferred embodiments of the present invention, the secondary transport section tSs is switchable between:
- a first status, wherein it bidirectionally connects the secondary user section uSs and the second further node;
- a second status, wherein it bidirectionally connects the secondary user section uSs and the primary transport section tSp; and
- a third status, wherein it bidirectionally connects the primary transport section tSp and the second further node.

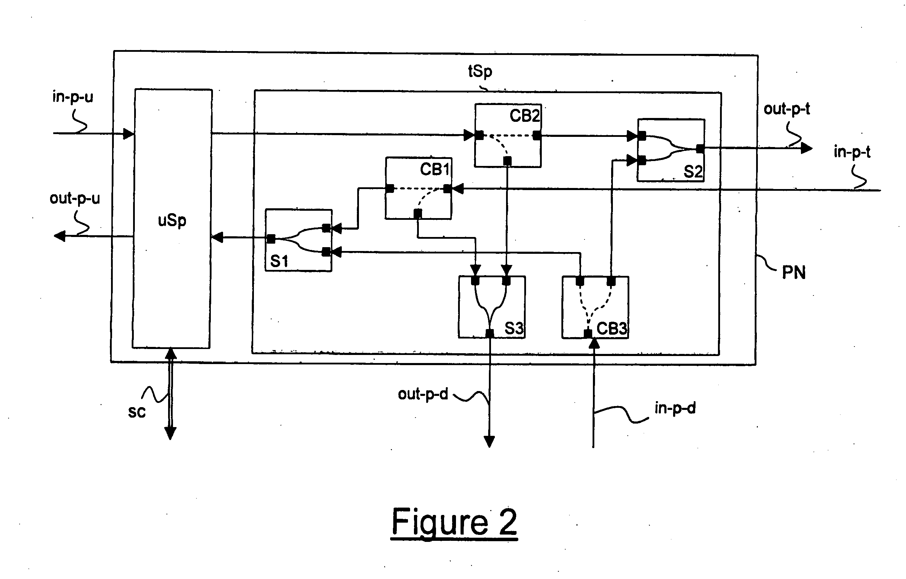

Herein after, by referring to Figure 2, the structure of the primary and secondary nodes PN and SN according to an embodiment of the present invention will be described in further detail. Since the nodes PN and SN preferably have substantially the same structure, Figure 1 shows the structure of the primary node PN only. In Figure 2, the node PN is represented in form of block diagram comprising a plurality of logical blocks. Each block can be implemented via hardware, via software or a combination of hardware and software. A single hardware device or a single software module may be configured to implement a part of a block, a whole block, or the combination of more adjacent or non adjacent blocks.

Preferably, the primary transport section tSp comprises a first selector S1, a second selector S2, a third selector S3, a first configurable bridge CB1, a second configurable bridge CB2 and a third configurable bridge CB3. The first selector S1, the second selector S2 and the third selector S3 have each a first input, a second input and an output, while the first configurable bridge CB1, the second configurable bridge CB2 and the third configurable bridge CB3 have each an input, a first output and a second output.

Preferably, the first output of the first configurable bridge CB1 is connected to the first input of the first selector S1, and the second output of the first configurable bridge CB1 is connected to the first input of the third selector S3. Further, preferably, the first output of the second configurable bridge CB2 is connected to the first input of the second selector S2, and the second output of the second configurable bridge CB2 is connected to the second input of the third selector S3. Further, preferably, the first output of the third configurable bridge CB3 is connected to the second input of the first selector S1, and the second output of the third configurable bridge CB3 is connected to the second input of the second selector S2.

Preferably, the primary user section uSp is connected at the input of the second configurable bridge CB2 and at the output of the first selector S1. Further, preferably, the output of the second selector S2 corresponds to the primary transport output out-p-t, and the input of the first configurable bridge CB1 corresponds to the primary transport input in-p-t. Finally, preferably, the output of the third selector S3 corresponds to the primary dual side output out-p-d, while the input of the third configurable bridge CB3 corresponds to the secondary dual side input in-p-d.

Preferably, the first configurable bridge CB1 is switchable between:
- a first configuration, wherein it connects its input to its first output (which, as mentioned above, is connected to the first selector S1); and
- a second configuration, wherein it connects its input to its second output (which, as mentioned above, is connected to the third selector S3). Preferably, the second configurable bridge CB2 is switchable between:
- a first configuration, wherein it connects its input to its first output (which, as mentioned above, is connected to the second selector S2); and
- a second configuration, wherein it connects its input to its second output (which, as mentioned above, is connected to the third selector S3).

Preferably, the third configurable bridge CB3 is switchable between:
- a first configuration, wherein it connects its input to its first output (which, as mentioned above, is connected to the first selector S1); and
- a second configuration, wherein it connects its input to its second output (which, as mentioned above, is connected to the second selector S2).

Therefore, when the first and second configurable bridges CB1 and CB2 are both in their first configuration, the primary transport section tSp is in its first status. Further, when the second configurable bridge CB2 is in its second configuration and the third configurable bridge CB3 is in its first configuration, the primary transport section tSp is in its second status. Finally, when the first and third configurable bridges CB1 and CB3 are both in their second configuration, the primary transport section tSp is in its third status.

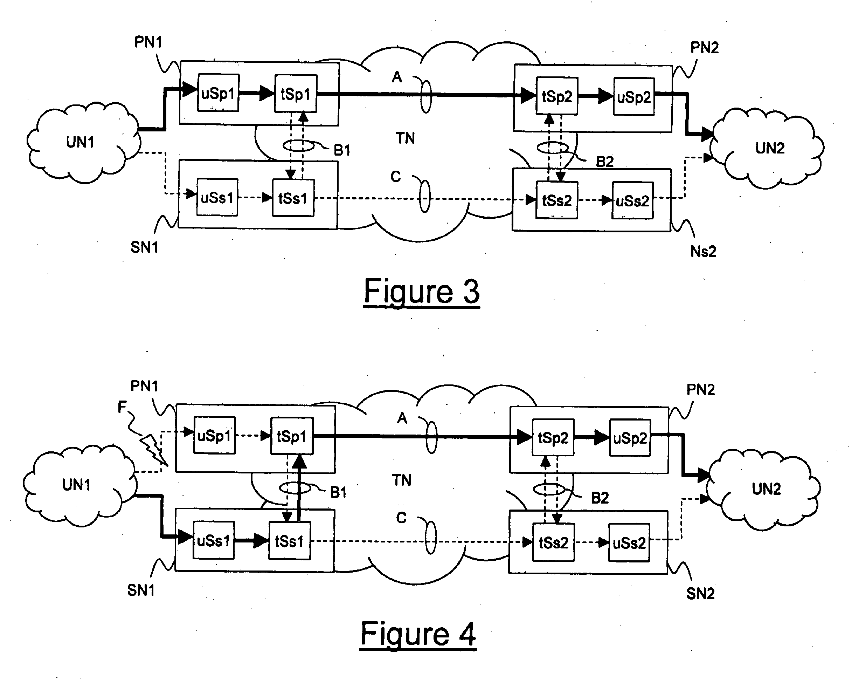

The telecommunication system shown in Figure 1 advantageously allows to implement a particularly efficient end-to-end traffic protection mechanism, as it will be described in detail herein after by referring to the examples shown in Figures 3 to 8.

Figures 3 to 8 show an exemplary telecommunication system comprising a transport network TN, a first user network UN1 and a second user network UN2. Preferably, the transport network comprises four edge nodes, namely: a first primary node PN1, a first secondary node SN1, a second primary node PN2 and a second secondary node SN2.

Preferably, the nodes PN1, SN1, PN2 and SN2 have a structure similar to the one of the primary node PN shown in Figure 2. In particular, preferably, the first primary node PN1 comprises a first primary user section uSp1 and a first primary transport section tSp1. Similarly, preferably, the first secondary node SN1 comprises a first secondary user section uSs1 and a first secondary transport section tSs1. Similarly, preferably, the second primary node PN2 comprises a second primary user section uSp2 and a second primary transport section tSp2. Similarly, preferably, the second secondary node SN2 comprises a second secondary user section uSs2 and a second secondary transport section tSs2.

Preferably, the first user network UN1 is connected to the first primary node PN1 by means of a first primary connection, and to the first secondary node SN1 by means of a first secondary connection. Similarly, preferably, the second user network UN2 is connected to the second primary node PN2 by means of a second primary connection, and to the second secondary node SN2 by means of a second secondary connection.

In the Figures 3 to 8:
- "B1" indicates the connection between the first primary and secondary transport sections tSp1 and tSs1;
- "B2" indicates the connection between the second primary and secondary transport sections tSp2 and tSs2;
- "A" indicates a connection crossing the transport network TN and linking the first and second primary transport sections tSp1 and tSp2; and
- "C" indicates a connection crossing the transport network TN and linking the first and second secondary transport sections tSs1 and tSs2.

Preferably, connections A and C comprise other nodes (not shown in Figures 3 to 8) of the transport network TN, while connections B1 and B2 do not comprise any other node (i.e. the nodes PN1 and SN1 are adjacent, and the nodes PN2 and SN are adjacent).

The signaling connections between the user sections uSp1 and uSs1 and between the user sections uSp2 and uSs2 are not shown in Figures 3 to 8 for clarity of the Figures.

In the following description, only the traffic transmitted from the first user network UN1 to the second user network UN2 is taken into account. This is not limiting, since the telecommunication system of Figures 3 to 8 is symmetrical, and therefore the same considerations also apply to traffic transmitted in the opposite direction (i.e. from UN2 to UN1).

Preferably, as it will be shown in further detail herein after, each of the above connections is bidirectionally monitored by means of suitable signaling messages. In particular, preferably, such signaling message allow to protect such connections against failures.

Figure 3 shows as a bold line the main path transporting traffic from UN1 to UN2 during normal operation of the telecommunication system (i.e. when no failure occurs). The traffic is transmitted from the first user network UN1 to the first primary node PN1 through the first primary connection. Within the node PN1, the traffic is received by the first primary user section uSp1, which processes and then transmits it to the first primary transport section tSp1. The first primary transport section tSp1 is in its first status, and therefore it forwards the traffic to the second primary transport section tSp2 through the connection A. Also the second primary transport section tSp2 is in its first status, and therefore it forwards the traffic to the second primary user section uSp2. Finally, the second primary user section uSp2 forwards the traffic to the second user network UN2 through the second primary connection.

This main path of Figure 3 is merely exemplary. Indeed, advantageously, the main path may be allocated across connections A, B1, B2 and C by the telecommunication system manager according to different criteria and taking into account the network topology, the traffic distribution and so on.

It is now assumed that a failure F occurs on the first primary connection, as shown in Figure 4. When the failure F occurs, suitable signaling messages are exchanged within the telecommunication system, which preferably induce the following steps:
- the first primary user section uSp1 becomes inactive, and the first secondary user section uSs1 becomes active thus receiving the traffic from the first user network UN1 through the first secondary connection;
- the first secondary transport section tSs1 enters its second status; and
- the first primary transport section tSp1 enters its third status.

Accordingly, the traffic is transmitted from the first secondary user section uSs1 to the first secondary transport section tSs1, then to the first primary transport section tSp1 through the connection B1, then to the second primary transport section tSp2 through the connection A, then to the second primary user section uSp2, and finally to the second user network UN2 through the second primary connection. The new activated path is shown in Figure 4 by a bold line.

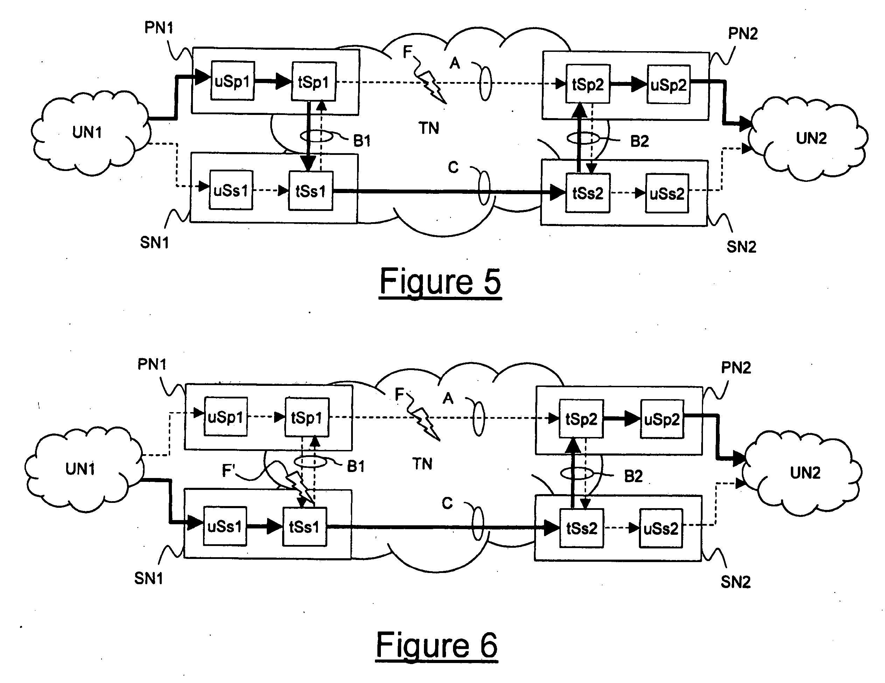

It is now assumed that a failure F occurs on the connection A, as shown in Figure 5. When the failure F occurs, suitable signaling messages are exchanged within the telecommunication system, which preferably induce the following steps:
- the first primary transport section tSp1 switches from its first status to its second status;
- the first secondary transport section tSp2 enters its third status;
- the second secondary transport section tSs2 enters its third status; and
- the second primary transport section tSp2 switches from its first status to its second status.

Accordingly, the traffic is transmitted from the first primary transport section tSp1 to the first secondary transport section tSs1 through the connection B1, then to the second secondary transport section tSs2 through the connection C, then to the second primary transport section tSp2 through the connection B2, then to the second primary user section uSp2, and finally to the second user network UN2 through the second primary connection. The new activated path is shown in Figure 5 by a bold line.

It is now assumed that, in the failure condition shown in Figure 5, a further failure F' occurs on the connection B1, as shown in Figure 6. When the failures F' occurs, suitable signaling messages are exchanged within the telecommunication system, which preferably induce the following steps:
- the first primary user section uSp1 becomes inactive, and the first secondary user section uSs1 becomes active thus receiving the traffic from the first user network UN1 through the first secondary connection; and
- the first secondary transport section tSs1 switches from its third status to its first status.

Accordingly, the traffic is transmitted from the first secondary user section uSs1 to the first secondary transport section tSs1, then to the second secondary transport section tSs2 through the connection C, then to the second primary transport section tSp2 through the connection B2, then to the second primary user section uSp2, and finally to the second user network UN2 through the second primary connection. The new activated path is shown in Figure 6 by a bold line.

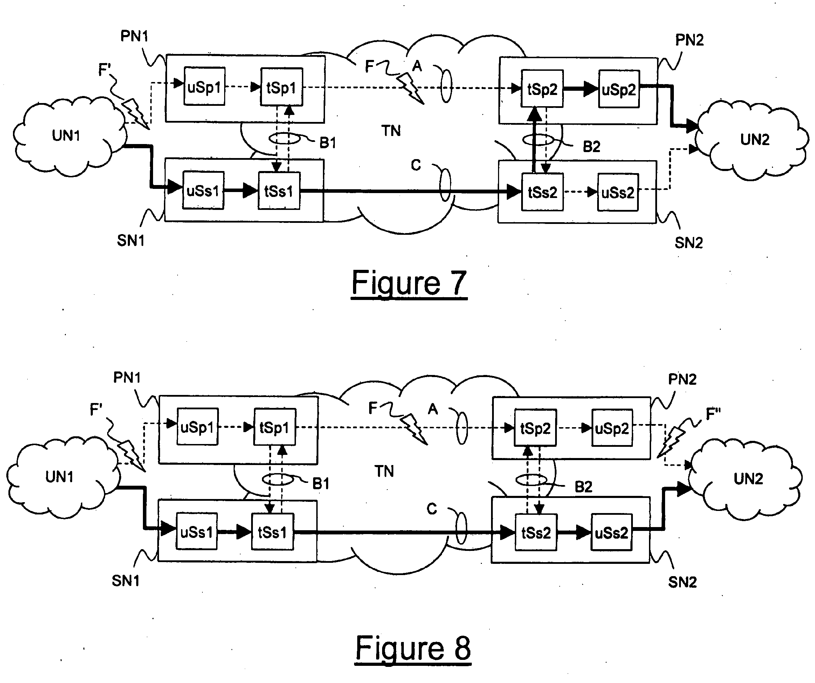

It is now assumed that, in the failure condition shown in Figure 5, a further failure F' occurs on the first primary connection, as shown in Figure 7. When the failures F' occurs, suitable signaling messages are exchanged within the telecommunication system, which preferably induce the following steps:
- the first primary user section uSp1 becomes inactive, and the first secondary user section uSs1 becomes active thus receiving the traffic from the first user network UN1 through the first secondary connection; and
- the first secondary transport section tSs1 switches from its third status to its first status.

Accordingly, the traffic is transmitted from the first secondary user section uSs1 to the first secondary transport section tSs1, then to the second secondary transport section tSs2 through the connection C, then to the second primary transport section tSp2 through the connection B2, then to the second primary user section uSp2, and finally to the second user network UN2 through the second primary connection. The new activated path is shown in Figure 7 by a bold line.

It is now assumed that, in the failure condition shown in Figure 7, a still further failure F" occurs on the second primary connection, as shown in Figure 8. When the failure F" occurs, suitable signaling messages are exchanged within the telecommunication system, which preferably induce the following step:
- the second secondary transport section tSs2 switches from its third status to its first status.

Accordingly, the traffic is transmitted from the first secondary user section uSs1 to the first secondary transport section tSs1, then to the second secondary transport section tSs2 through the connection C, then to the second secondary user section uSs2, and finally to the second user network UN2 through the second secondary connection. The new activated path is shown in Figure 8 by a bold line.

By comparing the originally active path shown in Figure 3 and the new activated paths shown in Figures 4 to 8, it can be noticed that, advantageously, the end-to-end traffic protection mechanism is very efficient, since protection is performed on a span-by-span basis, wherein the first span is the active path portion upstream the first primary/secondary user sections, the second span is the active path portion included between the first primary/secondary transport sections and the second primary/secondary transport sections, and the third span is the active path portion downstream the second primary/secondary user sections. In other words, advantageously, the new activated path is superimposed to the originally active path except for the failed span(s). This allows a particularly fast recovery of the traffic, since the activation of the new path only requires activation of one or few spans.

In particular, as shown in the example of Figure 4, if the failure F is not within the transport network TN (i.e. on the second span), the primary and secondary user sections modify their active/non active condition and/or the primary and secondary transport sections modify their status so that the new activated path is superimposed to the originally active path at least within the transport network TN. Therefore, advantageously, if the failure does not affect the active path within the transport network, allocation of the active path within the transport network is not changed by the traffic protection mechanism. This is particularly advantageous since, as stated in the introduction, allocation of a new path within a transport network is a very time-consuming operation, that would imply a delay in restoring the traffic.

On the other hand, as shown in Figure 5, if the failure occurs within the transport network, the primary and secondary user sections modify their active/non active condition and/or the primary and secondary transport sections modify their status so that the new activated path is superimposed to the originally active path within the user networks. Accordingly, advantageously, in this case the traffic protection mechanism is substantially transparent to user networks, which are not aware that a change in the allocation of the active path has been performed within the transport network.

Also the examples shown in Figures 6 and 7 show that, advantageously, the new activated path is superimposed to the originally active path except for the failed spans. The only situation wherein the new active path is completely different from the originally active path is the one shown in Figure 8, wherein three different failures occur on the three spans of the active path.

Further, the examples of Figures 6, 7 and 8 show that the traffic protection mechanism is very resilient against multiple failures affecting different spans of the active path.

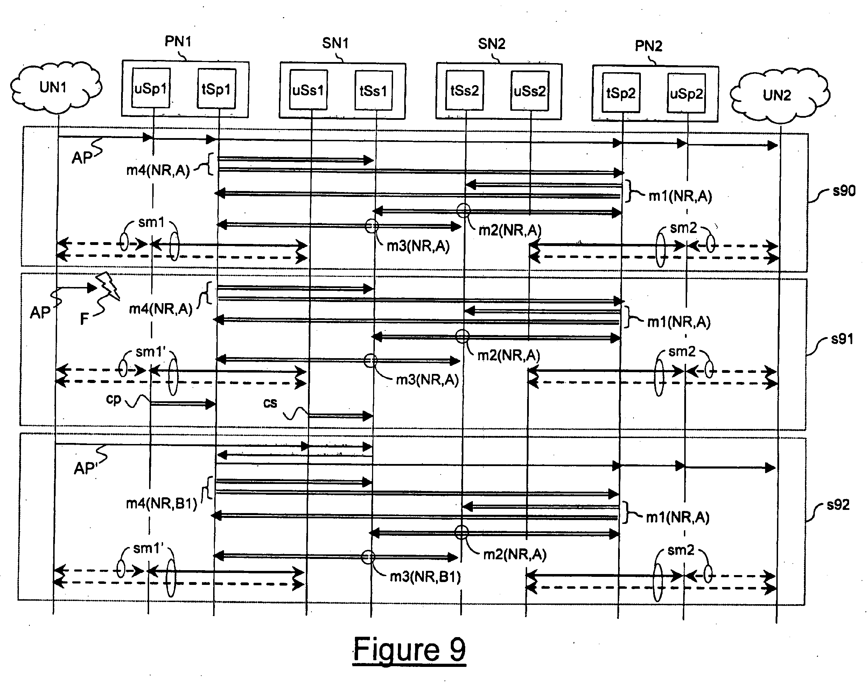

Figure 9 shows in further detail the operation of the telecommunication system of the Figures 3 to 8, when the failure F shown in Figure 4 occurs.

During a first step s90, the telecommunication system normally operates. Accordingly, the traffic is transported by the main path shown in Figure 3, which is indicated by AP in Figure 9.

Preferably, during step s90 the transport sections tSp2, tSs2, tSs1, tSp1 transmit to the logically adjacent transport sections respective signaling messages m1, m2, m3 and m4.

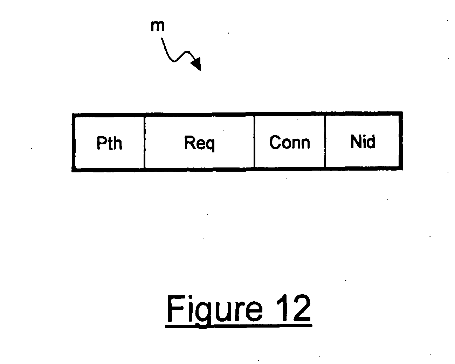

Preferably, the structure of the signaling messages m1, m2, m3 and m4 is substantially the same, and it is shown in Figure 12. Indeed, Figure 12 schematically shows the structure of a signaling message m according to an embodiment of the present invention. Preferably, the signaling message m comprises:
- a path field Pth identifying the path protected by the protection mechanism to which the signaling message m relates;
- a request field Req comprising an information indicative of a request performed by the transmission section transmitting the message m to the transmission section receiving the message m for protecting the path indicated in the path field Pth, as it will be described in further detail herein after;
- a connection field Conn indicating the connection through which the main path is allocated (i.e. A, B1, B2, or C); and
- a node field Nid indicating the edge node of the transport network TN to which the transmission section transmitting the message m belongs.

Preferably, the information indicative of a request which is comprised in the request field Req has one of the following values:
- FS (i.e. "forced switch"), i.e. the transport section receiving the signaling message m is requested to switch its status;
- SF (i.e. "signal fail"), i.e. the transport section receiving the signaling message m is informed that a failure occurred on the main path which caused interruption of traffic transmission;
- SD (i.e. "signal degrade"), i.e. the transport section receiving the signaling message m is informed that a failure occurred on the main path which caused degrade of traffic transmission performance;
- WTR (i.e. "wait to restore"), i.e. the transport section receiving the signaling message m is requested to wait a predefined time before switching its status;
- RR (i.e. "reverse request"), i.e. the transport section transmitting the signaling message m is acknowledging reception of a further signaling message with a FS request;
- DNR (i.e. "do not revert"), i.e. the transport section receiving the signaling message m is requested not to change status.
- LO (i.e. "lock-out"), i.e. the transport section receiving the signaling message m is requested to deactivate the traffic protection mechanism.

Preferably, the signaling message m has a priority depending on the value of the request field Req. When a transport section receives more than one signaling message, it preferably considers only the signaling message with the highest priority, while ignoring the other signaling messages. Preferably, the priority order of the signaling messages according to the value of their request field is the following: LO, FS, SF, SD, WTR, RR and DNR. Therefore, for example, if a transport section receives a first signaling message with a "SF" request field and a second signaling message with a "SD" field, the transport section only considers the "SF" request, while ignoring the "SD" request.

Therefore, the content of the various fields of the signaling messages m1, m2, m3 and m4 is the following:
- path field Pth: identifier of the path between the first primary transport section tSp1 and the second primary transport section tSp2;
- request field Req: "NR", i.e "no request", since the telecommunication system is normally operating in a failure-free condition;
- connection field Conn: "A"; and
- node field Nid: identifier of the node PN2, SN2, SN1 and PN1 for the signaling message m1, m2, m3 and m4, respectively.

For clarity, Figure 9 shows in parentheses the content of the fields Req and Conn of the signaling messages m1, m2, m3 and m4 during the various steps.

Further, preferably, during step s90 the first primary and secondary user sections uSp1 and uSs1 exchange each other signaling messages sm1 indicating that the first primary user section uSp1 is active and is receiving traffic from the first user network UN1 through the first primary connection. Optionally, such messages sm1 may be exchanged also with the first user network UN1 (as shown by dashed arrows in Figure 9). The format and content of such messages sm1 depend on the traffic protection mechanism of the first user network UN1, and they will not be described in further detail since they are not relevant to the present description.

Similarly, preferably, during step s90 the second primary and secondary user sections uSp2 and uSs2 exchange each other signaling messages sm2 indicating that the second primary user section uSp2 is active and is transmitting traffic to the second user network UN2 through the second primary connection. Optionally, such messages sm2 may be exchanged also with the second user network UN2 (as shown by dashed arrows in Figure 9). The format and content of such messages depend on the traffic protection mechanism of the second user network UN2, and they will not be described in further detail since they are not relevant to the present description.

During a subsequent step s91, the failure F on the first primary connection occurs, as shown also in Figure 4. When the failure F occurs, the first primary and secondary user sections uSp1 and uSs1 exchange each other (and, optionally, with the first user network UN1) signaling messages sm1' indicating that the first primary user section uSp1 is not receiving traffic from the first user network UN1 through the first primary connection. Then, during step s91, the traffic protection mechanism of the first user network UN1 induces deactivation of the first primary connection and activation of the first secondary connection, so that the first secondary user section uSs1 starts receiving traffic from the first user network UN1 through the first secondary connection. Then, during step s91, the first primary user section uSp1 preferably sends a command cp to the first primary transport section tSp1, which switches from its first status to its third status. Further, preferably, during step s91, upon exchange of signaling messages sm1' with the first primary user section uSp1, the first secondary user section uSs1 sends a command cs to the first secondary transport section tSs1. Preferably, the format and content of commands cp and cs depends upon the technology upon which the nodes PN1 and SN1 are based.

During a successive step s92, the first secondary transport section tSs1, upon reception of the command cs, enters its second status. The new path shown in Figures 4 and indicated as AP' in Figure 9 is then activated. Preferably, during step s92 the sections tSp1 and tSs1 change the content of the connection field Conn of the signaling messages m4 and m3, respectively, from "A" to "B1", thus indicating that the main path from UN1 to UN2 is now allocated across the connection B1. Preferably, since the failure F occurred outside the transport network TN, the request field Req is kept at its value "NR".

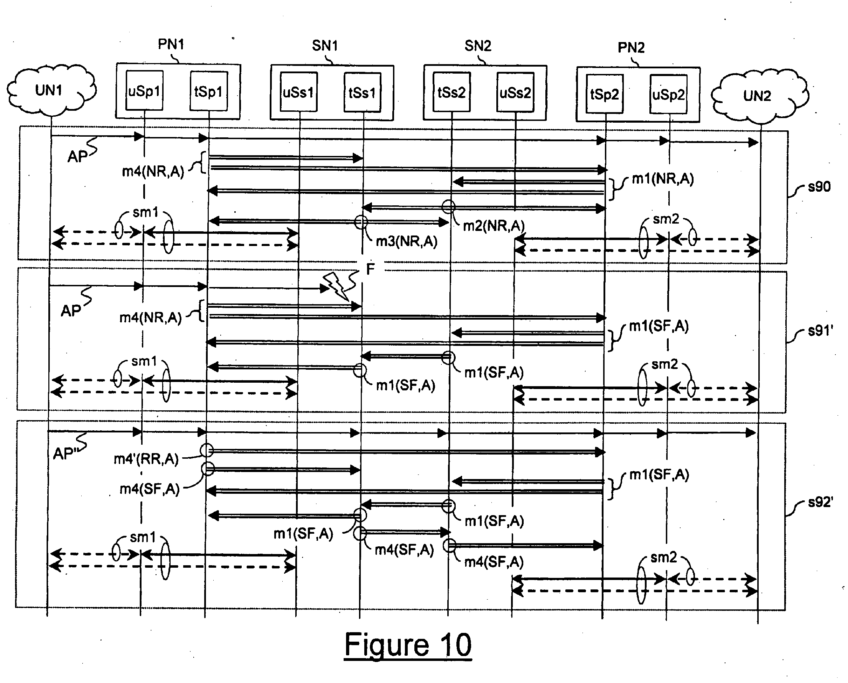

Figure 10 shows in further detail the operation of the telecommunication system of the Figures 3 to 8, when the failure F shown in Figure 5 occurs.

Step s90 is identical to the above described step s90 of Figure 9, and therefore a detailed description will not be repeated.

During a subsequent step s91', the failure F on the connection A occurs, as shown also in Figure 5. When the failure F occurs, preferably, since the second primary transport section tSp2 is not receiving traffic through the connection A, it preferably switches from its first status to its second status and it changes the content of the request field Req of the signaling message m1 from "NR" to a value indicating the presence of a failure, e.g. "SF". Preferably, upon reception of the message m1 from the second primary transport section tSp1, the second secondary transport section tSs2 enters a by-pass condition, i.e. it stops transmitting the signaling message m2 and it forwards the message m1 to the first secondary transport section tSs1 through the connection C. Upon reception of the signaling message m1, also the first secondary transport section tSs1 enters a by-pass condition, i.e. it stops transmitting the signaling message m3 and it forwards the message m1 to the first primary transport section tSp1 through he connection B1. This advantageously guarantees that the signaling messages generated by the primary transport sections tSp1 and tSp2 and including a switch request are received and used for coordinating protection.

During a subsequent step s92', the first primary transport section tSp1 receives the signaling message m1, and therefore it switches from its first status to it second status, wherein it forwards traffic received from the first primary user section uSp1 to the first secondary transport section tSs1 through the connection B1. Further, the first primary transport section tSp1 preferably acknowledges that the requested switch for protecting traffic has been performed by changing the content of the request field Req of the signaling message m4 directed to the second primary transport section tSp2 through the connection A from "NR" to "RR" (this signaling message is indicated as m4' in Figure 10). Further, preferably, upon reception of the signaling message m1, the first and second secondary transport sections tSs1, tSs2 enter their third status. The new path shown in Figures 5 and indicated as AP" in Figure 10 is then activated.

According to a first variant (which will be termed "non revertive variant"), when the failure F is removed the first and second primary transport sections tSp1 and tSp2 are kept is their second status, and the first and second secondary transport sections tSs1 and tSs2 is kept in their third status. In other words, the new activated path AP" is designated as main path, and therefore it continues to transport traffic even after failure removal. On the other hand, according to the a second variant (which will be termed "revertive variant"), when the failure F is removed, the first and second primary transport sections tSp1 and tSp2 switch from their second status to their first status. In other words, after failure removal the originally active path AP is restored. In this case, it is indifferent whether the first and second secondary transport sections tSs1 and tSs2 are kept in their third status or not, since they are not involved in traffic transmission when the originally active path AP is restored.

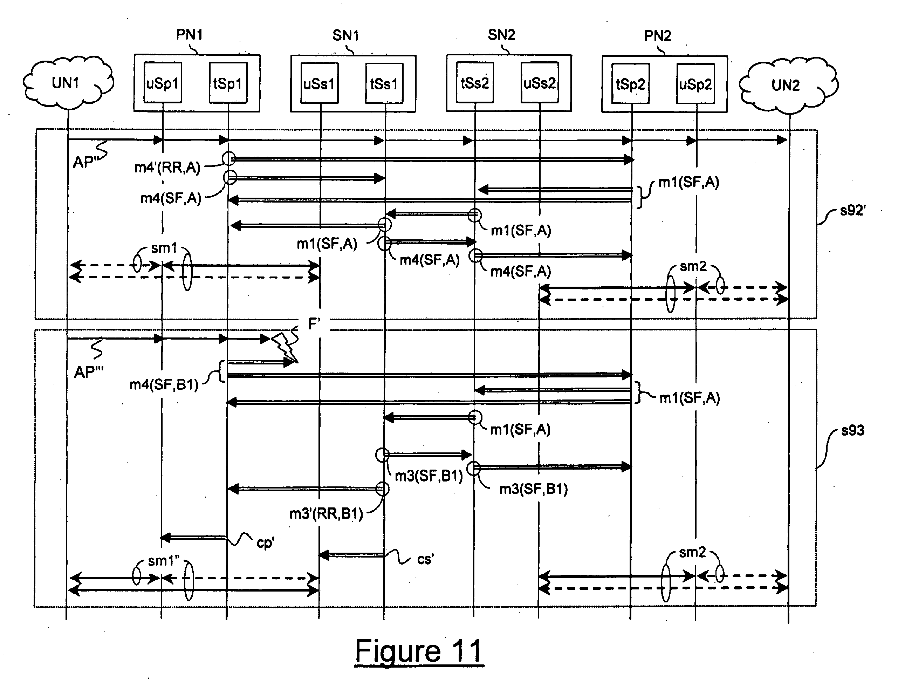

Figure 11 shows in further detail the operation of the telecommunication system of the Figures 3 to 8, when the failures F' shown in Figure 6 occur after the failure F of Figure 5 has occurred and the path AP" has been activated.

For clarity, Figure 11 show the above described step s92', which represents the starting point.

During a subsequent step s93, the failure F' shown in Figure 6 occurs. When the first primary transport section tSp1 realizes that the failure F' occurred on the connection B1, it changes the content of the request field Req of the signaling message m4 to one of the values indicative of a failure, e.g. "SF" and it changes the connection field Conn of the signaling message m4 from "A" to "B1". The message m4, which is preferably transmitted both to the second primary transport section tSp2 through the connection A and to the first secondary transport section tSs1 through the connection B1, actually reaches only the second primary transport section tSp2, since the connection B1 is now failed. Further, preferably, when the first secondary transport section tSs1 realizes that the failure F' occurred on the connection B1, it changes the content of the request field Req of the signaling message m3 from "NR" to "SF" and it changes the connection field Conn of the signaling message m3 from "A" to "B1". When the second secondary transport section tSs2 receives the message m3, it preferably forwards it to the second primary transport section tSp2 through the connection B2. Further, preferably, the first secondary transport section tSs1 enters its first status, and it changes the value of the request field Req of the signaling message m3 sent to tSp1 from "SF" to "RR" (such a message is indicates as m3' in Figure 11).

Further, preferably, during step s93, when the first primary transport section tSp1 realizes that the failure F' occurred on the connection B1, it sends to the first primary user section uSp1 a command cp', while the first secondary transport section tSs1 sends to the first secondary user section uSs1 a command cs'. Preferably, the format and content of the commands cp' and cs' depend on the technology upon which the nodes PN1 and SN1 are based.

In turn, the first primary and secondary user sections uSp1 and uSs1, upon reception of the commands cp' and cs', respectively, request to the traffic protection mechanism of the first user network UN1 to deactivate the first primary connection and to activate the first secondary connection through signaling messages sm1". Upon activation of the first secondary connection, the new path shown in Figure 6 and indicated as AP"' in Figure 11 is then activated.

According to the non revertive variant, when the failures F and F' are removed, the first primary user section uSp1 is kept inactive, the first secondary user section uSs1 is kept active, the first secondary transport section tSs1 is kept is its first status, the second secondary transport section tSs2 is kept in its third status and the second primary transport section tSp2 is kept in its second status. In other words, the newly activated path AP"' is designated as main path, and it continues to transport traffic even after failure removal. On the other hand, according to the revertive variant, when the failures F and F' are removed, the first primary user section uSp1 is activated, the first secondary user section uSs1 is deactivated and the first and second primary transport sections tSp1, tSp2 are switched from their second status to their first status. In other words, after failure removal the originally active path AP is restored.

Preferably, the above revertive variant is applied when the failure occurs on the main path, e.g. in cases wherein the failure occurs on the connection A (see example of Figures 5 and 10).

Further, preferably, according to embodiments not shown in the drawings, if a first failure occurs on the main path and a further failure occurs on the new active path (see for example Figures 6 and 11), further signaling messages may be sent to the first user network UN1 for recovering the path originally active within the first user network UN1 itself.

In the above examples, it has been shown that each transport section transmits signaling messages to logically adjacent transport sections. Preferably, such signaling messages relates only to connections through which the main path is allocated. However, according to preferred embodiments of the present invention, also connections which are not involved in allocation of the main path (i.e. which are not supporting traffic transmission) are monitored. Preferably, each of such connections is monitored by means of signaling messages exchanged between the two transport sections adjacent to such a connection.

Further, according to other embodiments of the present invention not shown in the drawings, if the transport network requires a particularly reliable traffic protection mechanism, the traffic protection mechanism of the present invention can be used in combination with other known traffic protection mechanisms protecting traffic within the transport network. In this case, preferably, for avoiding possible redundancies between the two traffic protection mechanisms upon detection of a same failure, a hold-off time mechanism can be provided. Such a hold-off time mechanism advantageously delays the intervention of one of the two traffic protection mechanisms (e.g. of the traffic protection mechanism of the present invention), thus allowing the other traffic protection mechanism (i.e. the known traffic protection mechanism) to restore traffic.

## Claims

1. A telecommunication system (TS) comprising a transport network (TN) and a user network (UN), the transport network (TN) comprising a first edge node (PN) and a second edge node (SN), the user network (UN) being connected to the transport network (TN) by means of the first edge node (PN) and the second edge node (SN), the first edge node (PN) comprising a first user section (uSp) and a first transport section (tSp) and the second edge node (SN) comprising a second user section (uSs) and a second transport section (tSs), wherein:
a) the first transport section (tSp) is connected to the second transport section (tSs); and
b) the first transport section (tSp) is switchable between each of:
b1) a first status, wherein said first transport section (tSp) connects said first user section (uSp) and a first node of said transport network (TN), while it does not connect said first user section (uSp) and said second transport section (tSs) and it does not connect said second transport section (tSs) and said first node of said transport network (TN);
b2) a second status, wherein said first transport section (tSp) connects said first user section (uSp) and said second transport section (tSs), while it does not connect said first user section (uSp) and said first node of said transport network (TN) and it does not connect said second transport section (tSs) and said first node of said transport network (TN); and
b3) a third status, wherein said first transport section (tSp) connects said second transport section (tSs) and said first node of said transport network (TN), while it does not connect said first user section (uSp) and said first node of said transport network (TN) and it does not connect said first user section (uSp) and said second transport section (tSs).

2. The telecommunication system (TS) of claim 1, wherein said second transport section (tSs) is switchable between each of:
c1) a first further status, wherein said second transport section (tSs) connects said second user section (uSs) and a second node of said transport network (TN), while it does not connect said second user section (uSs) and said first transport section (tSp) and it does not connect said first transport section (tSp) and said second node of said transport network (TN);
c2) a second further status, wherein said second transport section (tSs) connects said second user section (uSs) and said first transport section (tSp), while it does not connect said second user section (uSs) and said second node of said transport network (TN) and it does not connect said first transport section (tSp) and said second node of said transport network (TN); and
c3) a third further status, wherein said second transport section (tSs) connects said first transport section (tSp) and said second node of said transport network (TN), while it does not connect said second user section (uSs) and said second node of said transport network (TN) and it does not connect said second user section (uSs) and said first transport section (tSp).

3. The telecommunication system (TS) according to claim 1 or 2, wherein said first transport section (tSp) is configured to receive a signaling message either from said second transport section (tSs) or from said first node and to switch between said first status, said second status and said third status according to said signaling message.

4. The telecommunication system (TS) according to any of claims 1 to 3, wherein said first transport section (tSp) is configured to receive a first command (cp) from said first user section (uSp) and to switch between said first status, said second status and said third status according to said first command (cp).

5. The telecommunication system (TS) according to any of claims 1 to 4, wherein said first transport section (tSp) is further configured to transmit a second command (cp') to said first user section (uSp), said first user section (uSp) being configured to activate or deactivate according to said second command (cp').

6. Method of performing end-to-end traffic protection in a telecommunication system (TS), said telecommunication system (TS) comprising a transport network (TN) and a user network (UN), the transport network (TN) comprising a first edge node (PN) and a second edge node (SN), the user network (UN) being connected to the transport network (TN) by means of the first edge node (PN) and the second edge node (SN), the first edge node (PN) comprising a first user section (uSp) and first transport section (tSp) and the second edge node (SN) comprising a second user section (uSs) and a second transport section (tSs), the first transport section (tSp) being connected to the second transport section (tSs), said method comprising, at said first transport section (tSp):
a) receiving a suitable signaling message;
b) according to said signaling message, switching between each of a first status, a second status and a third status, wherein:
b1) in said first status, said first transport section (tSp) connects said first user section (uSp) and a first node of said transport network (TN), while it does not connect said first user section (uSp) and said second transport section (tSs) and it does not connect said second transport section (tSs) and said first node of said transport network (TN);
b2) in said second status, said first transport section (tSp) connects said first user section (uSp) and said second transport section (tSs), while it does not connect said first user section (uSp) and said first node of said transport network (TN) and it does not connect said second transport section (tSs) and said first node of said transport network (TN); and
b3) in said third status, said first transport section (tSp) connects said second transport section (tSs) and said first node of said transport network (TN), while it does not connect said first user section (uSp) and said first node of said transport network (TN) and it does not connect said first user section (uSp) and said second transport section (tSs).

7. The method of claim 7, further comprising, at said second transport section (tSs):
c) receiving a further suitable signaling message;
d) according to said further signaling message, switching between each of a first further status, a second further status and a third further status, wherein:
d1) in said first further status, said second transport section (tSs) connects said second user section (uSs) and a second node of said transport network (TN), while it does not connect said second user section (uSs) and said first transport section (tSp) and it does not connect said first transport section (tSp) and said second node of said transport network (TN);
d2) in said second further status, said second transport section (tSs) connects said second user section (uSs) and said first transport section (tSp), while it does not connect said second user section (uSs) and said second node of said transport network (TN) and it does not connect said first transport section (tSp) and said second node of said transport network (TN); and
d3) in said third further status, said second transport section (tSs) connects said first transport section (tSp) and said second node of said transport network (TN), while it does not connect said second user section (uSs) and said second node of said transport network (TN) and it does not connect said second user section (uSs) and said first transport section (tSp).

8. The method according to claim 6 or 7, wherein said step a) comprises receiving a signaling message either from said second transport section (tSs) or from said first node.

9. The method according to any of claims 6 to 8, wherein said step a) comprises receiving a first command (cp) from said first user section (uSp).

10. The method according to any of claims 6 to 9, wherein it further comprises:
e) transmitting a second command (cp') from said first transport section (tSp) to said first user section (uSp); and
f) activating or deactivating said first user section (uSp) according to said second command (cp').

## Patentansprüche

1. Telekommunikationssystem (TS), umfassend ein Transportnetzwerk (TN) und ein Benutzernetzwerk (UN), wobei das Transportnetzwerk (TN) einen ersten Randknoten (PN) und einen zweiten Randknoten (SN) umfasst, wobei das Benutzernetzwerk (UN) über den ersten Randknoten (PN) und den zweiten Randknoten (SN) an das Transportnetzwerk (TN) angeschlossen ist, wobei der erste Randknoten (PN) einen ersten Benutzerbereich (uSp) und einen ersten Transportbereich (tSp) und der zweite Randknoten (SN) einen zweiten Benutzerbereich (uSs) und einen zweiten Transportbereich (tSs) umfasst, wobei
a) der erste Transportbereich (tSp) mit dem zweiten Transportbereich (tSs) verbunden ist; und
b) der erste Transportbereich (tSp) jeweils schaltbar ist zwischen:
b1) einem ersten Zustand, in welchem der besagte erste Transportbereich (tSp) den besagten ersten Benutzerbereich (uSp) und einen ersten Knoten des besagten Transportnetzwerks (TN) verbindet, während er nicht den besagten ersten Benutzerbereich (uSp) und den besagten zweiten Transportbereich (tSs) verbindet und nicht den besagten zweiten Transportbereich (tSs) und den besagten ersten Knoten des besagten Transportnetzwerks (TN) verbindet;
b2) einem zweiten Zustand, in welchem der besagte erste Transportbereich (tSp) den besagten ersten Benutzerbereich (uSp) und den besagten zweiten Transportbereich (tSs) verbindet, während er nicht den besagten ersten Benutzerbereich (uSp) und den besagten ersten Knoten des besagten Transportnetzwerks (TN) verbindet und nicht den besagten zweiten Transportbereich (tSs) und den besagten ersten Knoten des besagten Transportnetzwerks (TN) verbindet; und
b3) einem dritten Zustand, in welchem der besagte erste Transportbereich (tSp) den besagten zweiten Transportbereich (tSs) und den besagten ersten Knoten des besagten Transportnetzwerks (TN) verbindet, während er nicht den besagten ersten Benutzerbereich (uSp) und den besagten ersten Knoten des besagten Transportnetzwerks (TN) verbindet und nicht den besagten ersten Benutzerbereich (uSp) und den besagten zweiten Transportbereich (tSs) verbindet.

2. Telekommunikationssystem (TS) nach Anspruch 1, wobei der besagte zweite Transportbereich (tSs) jeweils schaltbar ist zwischen:
c1) einem ersten weiteren Zustand, in welchem der besagte zweite Transportbereich (tSs) den besagten zweiten Benutzerbereich (uSs) und einen zweiten Knoten des besagten Transportnetzwerks (TN) verbindet, während er nicht den besagten zweiten Benutzerbereich (uSs) und den besagten ersten Transportbereich (tSp) verbindet und nicht den besagten ersten Transportbereich (tSp) und den besagten zweiten Knoten des besagten Transportnetzwerks (TN) verbindet;
c2) einem zweiten weiteren Zustand, in welchem der besagte zweite Transportbereich (tSs) den besagten zweiten Benutzerbereich (uSs) und den besagten ersten Transportbereich (tSp) verbindet, während er nicht den besagten zweiten Benutzerbereich (uSs) und den besagten zweiten Knoten des besagten Transportnetzwerks (TN) verbindet und nicht den besagten ersten Transportbereich (tSp) und den besagten zweiten Knoten des besagten Transportnetzwerks (TN) verbindet; und
c3) einem dritten weiteren Zustand, in welchem der besagte zweite Transportbereich (tSs) den besagten ersten Transportbereich (tSp) und den besagten zweiten Knoten des besagten Transportnetzwerks (TN) verbindet, während er nicht den besagten zweiten Benutzerbereich (uSs) und den besagten zweiten Knoten des besagten Transportnetzwerks (TN) verbindet und nicht den besagten zweiten Benutzerbereich (uSs) und den besagten ersten Transportbereich (tSp) verbindet).

3. Telekommunikationssystem (TS) nach Anspruch 1 oder 2, wobei der besagte erste Transportbereich (tSp) für den Empfang einer Signalisierungsnachricht entweder von dem besagten zweiten Transportbereich (tSs) oder von dem besagten ersten Knoten und für das Schalten zwischen dem besagten ersten Zustand, dem besagten zweiten Zustand und dem besagten dritten Zustand gemäß der besagten Signalisierungsnachricht konfiguriert ist.

4. Telekommunikationssystem (TS) nach einem beliebigen der Ansprüche 1 bis 3, wobei der besagte erste Transportbereich (tSp) für den Empfang eines ersten Befehls (cp) von dem besagten ersten Benutzerbereich (uSp) und für das Schalten zwischen dem besagten ersten Zustand, dem besagten zweiten Zustand und dem besagten dritten Zustand gemäß dem besagten ersten Befehl (cp) konfiguriert ist.

5. Telekommunikationssystem (TS) nach einem beliebigen der Ansprüche 1 bis 4, wobei der besagte erste Transportbereich (tSp) weiterhin für das Übertragen eines zweiten Befehls (cp') an den besagten ersten Benutzerbereich (uSp) konfiguriert ist, wobei der besagte erste Benutzerbereich (uSp) für das Aktivieren oder Desaktivieren gemäß dem besagten zweiten Befehl (cp') konfiguriert ist.

6. Verfahren zum Schützen eines Ende-zu-Ende-Verkehrs in einem Telekommunikationssystem (TS), wobei das besagte Telekommunikationssystem (TS) ein Transportnetzwerk (TN) und ein Benutzernetzwerk (UN) umfasst, wobei das Transportnetzwerk (TN) einen ersten Randknoten (PN) und einen zweiten Randknoten (SN) umfasst, wobei das Benutzernetzwerk (UN) über den ersten Randknoten (PN) und den zweiten Randknoten (SN) an das Transportnetzwerk (TN) angeschlossen ist, wobei der erste Randknoten (PN) einen ersten Benutzerbereich (uSp) und einen ersten Transportbereich (tSp) und der zweite Randknoten (SN) einen zweiten Benutzerbereich (uSs) und einen zweiten Transportbereich (tSs) umfasst, wobei der erste Transportbereich (tSp) mit dem zweiten Transportbereich (tSs) verbunden ist, wobei das besagte Verfahren an dem besagten ersten Transportbereich (tSp) umfasst:
a) Empfangen einer entsprechenden Signalisierungsnachricht;
b) gemäß der besagten Signalisierungsnachricht, Schalten zwischen jeweils einem ersten Zustand, einem zweiten Zustand und einem dritten Zustand, wobei:
b1) der besagte erste Transportbereich (tSp) in dem besagten ersten Zustand den besagten ersten Benutzerbereich (uSp) und einen ersten Knoten des besagten Transportnetzwerks (TN) verbindet, während er nicht den besagten ersten Benutzerbereich (uSp) und den besagten zweiten Transportbereich (tSs) verbindet und nicht den besagten zweiten Transportbereich (tSs) und den besagten ersten Knoten des besagten Transportnetzwerks (TN) verbindet;
b2) der besagte erste Transportbereich (tSp) in dem besagten zweiten Zustand den besagten ersten Benutzerbereich (uSp) und den besagten zweiten Transportbereich (tSs) verbindet, während er nicht den besagten ersten Benutzerbereich (uSp) und den besagten ersten Knoten des besagten Transportnetzwerks (TN) verbindet und nicht den besagten zweiten Transportbereich (tSs) und den besagten ersten Knoten des besagten Transportnetzwerks (TN) verbindet; und
b3) der besagte erste Transportbereich (tSp) in dem besagten dritten Zustand den besagten zweiten Transportbereich (tSs) und den besagten ersten Knoten des besagten Transportnetzwerks (TN) verbindet, während er nicht den besagten ersten Benutzerbereich (uSp) und den besagten ersten Knoten des besagten Transportnetzwerks (TN) verbindet und nicht den besagten ersten Benutzerbereich (uSp) und den besagten zweiten Transportbereich (tSs) verbindet.

7. Verfahren nach Anspruch 7, weiterhin umfassend, an dem besagten zweiten Transportbereich (tSs):
c) Empfangen einer weiteren entsprechenden Signalisierungsnachricht;
d) gemäß der besagten weiteren Signalisierungsnachricht, Schalten zwischen jeweils einem ersten Zustand, einem zweiten Zustand und einem dritten Zustand, wobei:
d1) der besagte zweite Transportbereich (tSs) in dem besagten ersten weiteren Zustand den besagten zweiten Benutzerbereich (uSs) und einen zweiten Knoten des besagten Transportnetzwerks (TN) verbindet, während er nicht den besagten zweiten Benutzerbereich (uSs) und den besagten ersten Transportbereich (tSp) verbindet und nicht den besagten ersten Transportbereich (tSp) und den besagten zweiten Knoten des besagten Transportnetzwerks (TN) verbindet;
d2) der besagte zweite Transportbereich (tSs) in dem besagten zweiten weiteren Zustand den besagten zweiten Benutzerbereich (uSs) und den besagten ersten Transportbereich (tSp) verbindet, während er nicht den besagten zweiten Benutzerbereich (uSs) und den besagten zweiten Knoten des besagten Transportnetzwerks (TN) verbindet und nicht den besagten ersten Transportbereich (tSp) und den besagten zweiten Knoten des besagten Transportnetzwerks (TN) verbindet; und
d3) der besagte zweite Transportbereich (tSs) in dem besagten dritten weiteren Zustand den besagten ersten Transportbereich (tSp) und den besagten zweiten Knoten des besagten Transportnetzwerks (TN) verbindet, während er nicht den besagten zweiten Benutzerbereich (uSs) und den besagten zweiten Knoten des besagten Transportnetzwerks (TN) verbindet und nicht den besagten zweiten Benutzerbereich (uSs) und den besagten ersten Transportbereich (tSp) verbindet.

8. Verfahren nach Anspruch 6 oder 7, wobei der besagte Schritt a) das Empfangen einer Signalisierungsnachricht entweder von dem besagten zweiten Transportbereich (tSs) oder von dem besagten ersten Knoten umfasst.

9. Verfahren nach einem beliebigen der Ansprüche 6 bis 8, wobei der besagte Schritt a) das Empfangen eines ersten Befehls (cp) von dem besagten ersten Benutzerbereich (uSp) umfasst.

10. Verfahren nach einem beliebigen der Ansprüche 6 bis 9, weiterhin umfassend:
e) Übertragen eines zweiten Befehls (cp') von dem besagten ersten Transportbereich (tSp) an den besagten ersten Benutzerbereich (uSp); und
f) Aktivieren oder Desaktivieren des besagten ersten Benutzerbereichs (uSp) gemäß dem besagten zweiten Befehl (cp').

## Revendications

1. Système de télécommunication (TS) comprenant un réseau de transport (TN) et un réseau d'utilisateur (UN), le réseau de transport (TN) comprenant un premier noeud périphérique (PN) et un deuxième noeud périphérique (SN), le réseau d'utilisateur (UN) étant connecté au réseau de transport (TN) au moyen du premier noeud périphérique (PN) et du deuxième noeud périphérique (SN), le premier noeud périphérique (PN) comprenant une première section d'utilisateur (uSp) et une première section de transport (tSp) et le deuxième noeud périphérique (SN) comprenant une deuxième section d'utilisateur (uSs) et une deuxième section de transport (tSs), système avec lequel
a) la première section de transport (tSp) est connectée à la deuxième section de transport (tSs) ; et
b) la première section de transport (tSp) peut être commutée entre :
b1) une premier état, dans lequel ladite première section de transport (tSp) connecte ladite première section d'utitisateur (uSp) et un premier noeud dudit réseau de transport (TN), alors qu'elle ne connecte pas ladite première section d'utilisateur (uSp) et ladite deuxième section de transport (tSs) et elle ne connecte pas ladite deuxième section de transport (tSs) et ledit premier noeud dudit réseau de transport (TN) ;
b2) un deuxième état, dans lequel ladite première section de transport (tSp) connecte ladite première section d'utilisateur (uSp) et ladite deuxième section de transport (tSs), alors qu'elle ne connecte pas ladite première section d'utilisateur (uSp) et ledit premier noeud dudit réseau de transport (TN) et elle ne connecte pas ladite deuxième section de transport (tSs) et ledit premier noeud dudit réseau de transport (TN) ; et
b3) un troisième état, dans lequel ladite première section de transport (tSp) connecte ladite deuxième section de transport (tSs) et ledit premier noeud dudit réseau de transport (TN), alors qu'elle ne connecte pas ladite première section d'utilisateur (uSp) et ledit premier noeud dudit réseau de transport (TN) et elle ne connecte pas ladite première section d'utilisateur (uSp) et ladite deuxième section de transport (tSs).

2. Système de télécommunications (TS) selon la revendication 1, avec lequel ladite deuxième section de transport (tSs) peut être commutée entre :
c1) un premier état supplémentaire, dans lequel ladite deuxième section de
transport (tSs) connecte ladite deuxième section d'utilisateur (uSs) et un deuxième noeud dudit réseau de transport (TN), alors qu'elle ne connecte pas ladite deuxième section d'utilisateur (uSs) et ladite première section de transport (tSp) et elle ne connecte pas ladite première section de transport (tSp) et ledit deuxième noeud dudit réseau de transport (TN) ;
c2) un deuxième état supplémentaire, dans lequel ladite deuxième section de transport (tSs) connecte ladite deuxième section d'utitisateur (uSs) et ladite première section de transport (tSp), alors qu'elle ne connecte pas ladite deuxième section d'utilisateur (uSs) et ledit deuxième noeud dudit réseau de transport (TN) et elle ne connecte pas ladite première section de transport (tSp) et ledit deuxième noeud dudit réseau de transport (TN) ; et
c3) un troisième état supplémentaire, dans lequel ladite deuxième section de transport (tSs) connecte ladite première section de transport (tSp) et ledit deuxième noeud dudit réseau de transport (TN), alors qu'elle ne connecte pas ladite deuxième section d'utilisateur (uSs) et ledit deuxième noeud dudit réseau de transport (TN) et elle ne connecte pas ladite deuxième section d'utilisateur (uSs) et ladite première section de transport (tSp),

3. Système de télécommunication (TS) selon la revendication 1 ou 2, avec lequel ladite première section de transport (tSp) est configurée pour recevoir un message de signalisation de la part soit de ladite deuxième section de transport (tSs), soit dudit premier noeud, et pour commuter entre ledit premier état, ledit deuxième état et ledit troisième état conformément audit message de signalisation.

4. Système de télécommunication (TS) selon l'une quelconque des revendications 1 à 3, avec lequel ladite première section de transport (tSp) est configurée pour recevoir une première commande (cp) de la part de ladite première section d'utilisateur (tUp) et pour commuter entre ledit premier état, ledit deuxième état et ledit troisième état conformément à ladite première commande (cp).

5. Système de télécommunication (TS) selon l'une quelconque des revendications 1 à 4, avec lequel ladite première section de transport (tSp) est en outre configurée pour émettre une deuxième commande (cp') vers ladite première section d'utilisateur (tUp), ladite première section d'utilisateur (tUp) étant configurée pour s'activer ou se désactiver conformément à ladite deuxième commande (cp').

6. Procédé de réalisation de la protection du trafic de bout en bout dans un système de télécommunication (TS), ledit système de télécommunication (TS) comprenant un réseau de transport (TN) et un réseau d'utilisateur (UN), le réseau de transport (TN) comprenant un premier noeud périphérique (PN) et un deuxième noeud périphérique (SN), le réseau d'utilisateur (UN) étant connecté au réseau de transport (TN) au moyen du premier noeud périphérique (PN) et du deuxième noeud périphérique (SN), le premier noeud périphérique (PN) comprenant une première section d'utilisateur (uSp) et une première section de transport (tSp) et le deuxième noeud périphérique (SN) comprenant une deuxième section d'utilisateur (uSS) et une deuxième section de transport (tSs), la première section de transport (tSp) étant connecté à la deuxième section de transport (tSs), ledit procédé comprenant, au niveau de ladite première section de transport (tSp) :
a. réception d'un message de signalisation approprié ;
b. conformément audit message de signalisation, commutation entre un premier état, un deuxième état et un troisième état, procédé selon lequel :
b1) dans ledit premier état, ladite première section de transport (tSp) connecte ladite première section d'utilisateur (uSp) et un premier noeud dudit réseau de transport (TN), alors qu'elle ne connecte pas ladite première section d'utilisateur (uSp) et ladite deuxième section de transport (tSs) et elle ne connecte pas ladite deuxième section de transport (tSs) et ledit premier noeud dudit réseau de transport (TN) ;
b2) dans ledit deuxième état, ladite première section de transport (tSp) connecte ladite première section d'utilisateur (uSp) et ladite deuxième section de transport (tSs), alors qu'elle ne connecte pas ladite première section d'utilisateur (uSp) et ledit premier noeud dudit réseau de transport (TN) et elle ne connecte pas ladite deuxième section de transport (tSs) et ledit premier noeud dudit réseau de transport (TN) ; et
b3) dans ledit troisième état, ladite première section de transport (tSp) connecte ladite deuxième section de transport (tSs) et ledit premier noeud dudit réseau de transport (TN), alors qu'elle ne connecte pas ladite première section d'utilisateur (uSp) et ledit premier noeud dudit réseau de transport (TN) et elle ne connecte pas ladite première section d'utilisateur (uSp) et ladite deuxième section de transport (tSs).

7. Procédé selon la revendication 7, comprenant en plus, au niveau de ladite deuxième section de transport (tSs) :
c) réception d'un message de signalisation approprié supplémentaire,
d) conformément audit message de signalisation supplémentaire, commutation entre un premier supplémentaire, un deuxième état supplémentaire et un troisième état supplémentaire, procédé selon lequel :
d1) dans ledit premier état supplémentaire, ladite deuxième section de transport (tSs) connecte ladite deuxième section d'utilisateur (uSs) et un deuxième noeud dudit réseau de transport (TN), alors qu'elle ne connecte pas ladite deuxième section d'utilisateur (uSs) et ladite première section de transport (tSp) et elle ne connecte pas ladite première section de transport (tSp) et ledit deuxième noeud dudit réseau de transport (TN) ;
d2) dans ledit deuxième état supplémentaire, ladite deuxième section de transport (tSs) connecte ladite deuxième section d'utilisateur (uSs) et ladite première section de transport (tSp), alors qu'elle ne connecte pas ladite deuxième section d'utilisateur (uSs) et ledit deuxième noeud dudit réseau de transport (TN) et elle ne connecte pas ladite première section de transport (tSp) et ledit deuxième noeud dudit réseau de transport (TN) ; et
d3) dans ledit troisième état supplémentaire, ladite deuxième section de transport (tSs) connecte ladite première section de transport (tSp) et ledit deuxième noeud dudit réseau de transport (TN), alors qu'elle ne connecte pas ladite deuxième section d'utilisateur (uSs) et ledit deuxième noeud dudit réseau de transport (TN) et elle ne connecte pas ladite deuxième section d'utilisateur (uSs) et ladite première section de transport (tSp).

8. Procédé selon la revendication 6 ou 7, selon lequel ladite étape a) comprend la réception d'un message de signalisation soit de la part de ladite deuxième section de transport (tSs), soit de la part dudit premier noeud.

9. Procédé selon l'une quelconque des revendications 6 à 8, selon lequel ladite étape a) comprend la réception d'une première commande (cp) de la part de ladite première section d'utilïsateur (tUp).

10. Procédé selon l'une quelconque des revendications 6 à 9, comprenant en outre les étapes suivantes :
e) émission d'une deuxième commande (cp') de ladite première section de transport (tSp) vers ladite première section d'utilisateur (uSp) ; et
f) activation ou désactivation de ladite première section d'utilisateur (uSp) conformément à ladite deuxième commande (cp')..
